# EUROPEAN PATENT SPECIFICATION

(11) **EP 0 442 840 B1**
(45) Date of publication and mention of the grant of the patent: **26.03.1997**
(21) Application number: 91500004.6
(22) Date of filing: 15.01.1991
(51) Int. Cl.: E02D 29/12, H02G 9/10

(54) **Apparatus for constructing manholes**
Vorrichtung für die Herstellung von Schächten
Dispositif pour fabrication de regards

(30) Priority: 15.01.1990 ES 9000088
(43) Date of publication of application: 21.08.1991
(73) Proprietor: Garcia Ballesteros, Angel, E-29016 Malaga (ES)
(72) Inventor: Garcia Ballesteros, Angel, E-29016 Malaga (ES)
(74) Representative: Garcia Cabrerizo, Francisco

(56) References cited:
- US-A- 3 974 599

## Description

The invention refers to a procedure for making in-situ underground manholes intended for use in ductwork for electric and telephone lines allowing for the performance of mounting and maintenance work in such manholes by the relevant personnel.

The procedure in question is based on laying a mould with the shape of the manhole to be carried out. Such mould is made of a light-weight PVC or PRC (glass-fibre reinforced polyester resin compound) material with the appropriate strength and it is laid in the ditch or shaft along which the ductwork will run and then covered with H-100 type light-weight concrete or compacted earth, while the internal finish of such manhole is provided for by the non-recoverable mould or formwork itself mentioned above.

At present, 95% of manholes carried out are being made by using the traditional brickwork system, while the remaining 5% are made of precast concrete. In the first case, the following procedure is used:
1.- Opening of the shaft in the street making sure that the shaft is aligned with the ditches opened for laying the ducts.
2.- Constructions of a 1-foot or 1/2-foot (304.8 or 152.4 mm) brickwork wall ending in a dome-shaped top.
3.- Laying of a cover supporting frame made of 60 x 60 mm or 80 x 80 mm L-shape metal profiles. This frame will house the corresponding cover.
4.- Filling of the gap left between the shaft excavation and the manhole with compacted earth or concrete.

The inconveniences posed by the execution of the type of manhole described above may be summarized as follows :
a. The execution times for a manhole are long. Two men, i.e. a skilled labourer and an unskilled labourer, both well-qualified, are required. Time required for the execution of one unit is 7 hours.
b. Dependence on materials such as bricks, mortar, water, etc. and tools required for the execution at the excavation site.
c. High cost of execution. The cost prices for carrying out a manhole of this type are higher than thirty thousand pesetas.
d. Permeability of the manhole walls. The carrying out of manholes using brickwork and concrete and the difficulty and high cost involved in making them watertight makes possible the entry of underground water and moisture into the manholes.
e. The manhole walls are made of electric current conducting materials (bricks, concrete) and so earth leakage through them is possible thus posing a potential hazard for maintenance personnel.
f. In time, the cover supporting metal profile will undergo a degradation caused by rusting.

When manholes are made by precast concrete, then the use of brickwork is avoided but again other problems arise such as the difficulty in carrying and handling the pieces because of their heavy weight. Other problem posed is their fragility.

U.S.-A-3,974,599 discloses an underground reinforced plastic enclosure comprising a body having two parts which are assembled by suitable nuts and bolts to form the body. This assembling method renders the execution time for a manhole rather long because of nuts and bolts needed to connect therebetween the two molded members. Moreover, the two parts of the body must be connected to each other before disposing the body in the hole. This has for drawback that the body may be too heavy for a workman. Should one part of the body inserted in the hole before the second part, the workman will have some difficulty to assemble together these two parts because at least the nuts and bolts at the lower and intermediate parts of the body are not easily reachable. On the other hand, as shown in figure 2 of US-A-3,974,599 a top cap is secured to the upper portion of the body by means of brackets and bolts. This renders the structure of the whole assembly more complicated and more expensive since the time for the workman to assemble the top cap to the body is rather long.

The invention eliminates all the drawbacks of the prior art by providing an apparatus for making an underground manhole using two molded members of a very simple structure and reducing the time for executing the manhole as well as the costs therefore.

To this purpose, the invention proposes an apparatus having the features defined in claim 1.

Other features of the invention result from dependent claims 2-7 incorporated herein.

Thus, an appropriate raw material will be selected, which will be based on reinforced plastic compounds such as glass-fibre reinforced polyester resins which show a high stability to degradation in addition to high mechanical characteristics.

However, in accordance with the proposed procedure, the raw material to be used makes no difference and in each case, the material offering the best characteristics will be selected, this being either of the type described above or based on PVC plastic derivatives.

The material known as S.M.C. (vitropreg) will be preferably used since it offers electric current insulating and self-extinguishing properties, as well as those characteristics associated with polyester-fibre compounds.

The manhole according to the invention is made by putting together two identical pieces which offer a rectangular cross-section and a longitudinal cross-section in accordance with the contour the manhole will have, but always showing an upper staggered neck or mouth where a closing cover will be inserted and seated.

The advantages derived from the manhole made in accordance with the object of the invention are the following :
1. The shaft or hole required for laying the manhole is smaller with this involving a smaller excavation volume and therefore a saving in excavation and earth transportation.
2. The execution time is very short and no qualified personnel is required. The operation is carried out by only one man since each piece only weighs 11 kg.
3. There is no dependence on components and materials (mortar, bricks, etc.) but only the module itself.
4. The certainty that all the manholes will be identical so that the standards prescribed by the various utilities can be readily complied with.
5. The price of those manholes carried out by using this system will involve cost savings of 50% in respect of the price of present manholes.
6. The manholes will be fully watertight, thus preventing the entry of underground water and moisture.
7. The manholes will not be electric current conducting, thus preventing earth leakage currents and possible accidents.
8. The cover supporting frame and the rest of the manhole remain unchanged by ewather agents so that rusting becomes impossible.

In order to facilitate a better understanding of the novel characteristics, a detailed description is given below which is based on a set of drawings attached to this description as forming part of the same and where the following is stated solely for guidance and not for a restraining purpose:

Figure 1 shows a plan view of the module for carrying out the manhole according to the object of the invention.

Figure 2 shows a cross-sectional drawing on the plane corresponding to cutting line II-II in figure 1.

Figure 3 shows a plan view of a manhole carried out according to the object of the invention.

Figure 4 shows a cross-sectional drawing on the plane corresponding to cutting line IV-IV in figure 3.

Figure 5 shows a plan view of the two pieces through which the module shown in figure 1 and 2 is obtained.

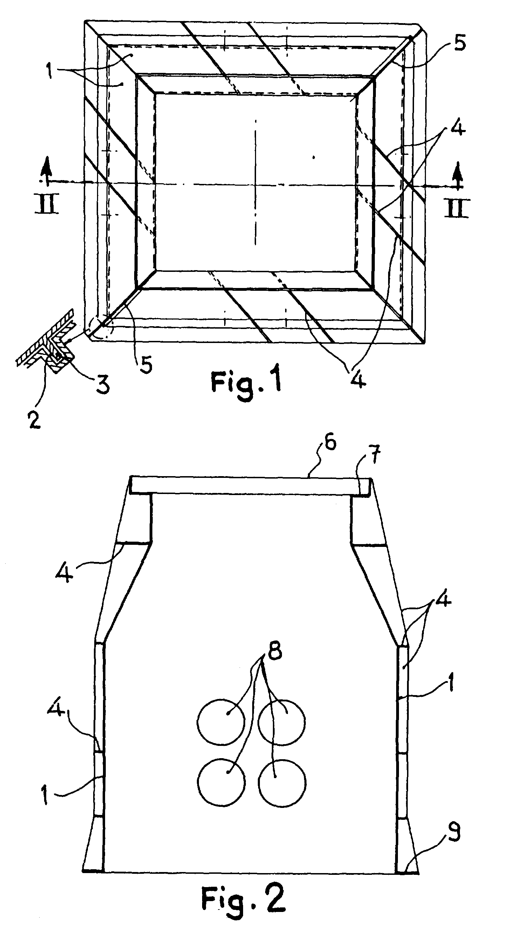

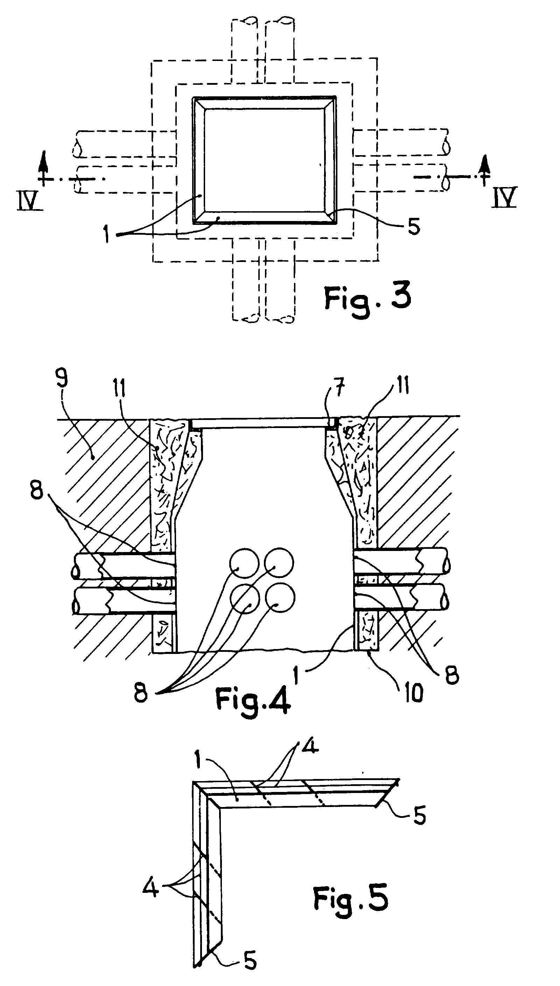

From figures mentioned above, it can be seen that the mould shown in figures 1 and 2 is achieved by fitting together two identical pieces one of which is shown in figure 5 and referred to as (1). This fitting is carried out as a result of one of both pieces (1) having a channel (2) while the other piece is provided with a rib (3) where such channel fits and this is provided for on the fitting edge or borders (5) since both pieces (1) have a rectangular cross-section, as can be seen in figure 5.

Such pieces are provided with both longitudinal and transverse reinforcement ribs (4) having different widths. The profile of such pieces is such that when joined together, they form a quadrangular hollow body which is narrowed toward the top where the mouth (6) takes form with a staggering profile intended for support and fit of the corresponding cover.

The module thus formed will be provided with holes (8) on its walls which are intended for the passage of ducts. It will be laid on a ditch or shaft carried out on the ground (9) and provided with a base (10) having an external wing intended to counteract the punching action on the ground. The openings (8) do not go through, that is they are just indicated and the wall is weakened in this area to facilitate the opening of the holes when required and in the number desired or to be used, with the remaining openings being left completely watertight.

Once the module described above is lodged in the shaft or ditch, it is externally filled up with concrete (11) thus forming the manhole as can be seen in figures 3 and 4.

## Claims

1. Apparatus for constructing a manhole comprising first and second molded members (1) connected to each other by connecting means (2, 3) located on edges (5) of the walls of the first and second molded members (1) to define an internal chamber and intended to be disposed in a hole realized in a soil at a desired location, characterized in that the first molded member (1) has first and second walls substantially perpendicular to each other and having an upper portion, an intermediate portion, and a lower portion, wherein the intermediate portion is tapered such that the upper portion is of a dimension less than the lower portion ; the second molded member (1) has first and second walls substantially perpendicular to each other and having an upper portion, an intermediate portion and a lower portion, the intermediate portion being tapered such that the upper portion is of a dimension less than the lower potion ; whereby the rectangular chamber defined by the first and secon molded members (1) connected to each other by the connecting means (2, 3) is narrowed toward the top to provide a mouth (6) having a staggered cross-section intended to support and fit a corresponding cover ; and in that the connecting means (2, 3) comprise a rib (3) on the first wall of the first and second molded members (1), respectively, and a channel (2) on the second wall of the first and second molded members, respectively, adapted to receive therein the rib (3).

2. Apparatus according to claim 1, characterized in that the first and second molded members (1) are substantially L-shaped.

3. Apparatus according to claim 1, characterized in that the first and second walls of the first and second molded members (1) include reinforcement ribs (4).

4. Apparatus according to claim 1, characterized in that the first and second walls of the first and second molded members incorporate an area of weakness to facilitate the removal of such areas, thereby providing apertures in the wall for receiving a duct.

5. Apparatus according to claim 1, characterized in that the first and second molded members are comprised of lightweight material.

6. Apparatus according to claim 1, characterized in that the molded members are comprised of a plastics material.

7. Apparatus as claimed in claim 1, characterized in that the molded members are comprised of polyester fiber.

## Patentansprüche

1. Gerät zur Herstellung einer Zugangsöffnung, einen ersten und einen zweiten Formkörper (1) enthaltend, welche untereinander durch Verbindungsmittel (2, 3) verbunden sind, die sich an den Rändern (5) der Wände der genannten ersten und zweiten Formkörper (1) befinden, unter Ausbildung einer inneren Kammer, die zur Anordnung an einem an einer gewünschten Stelle in der Erde ausgebildeten Loch bestimmt ist, dadurch gekennzeichnet, dass der erste Formkörper (1) eine erste und eine zweite Wand aufweist, die im wesentlichen senkrecht zueinander stehen und mit einem Ober-, einem Mittel- und einem Unterteil versehen sind, wobei das Mittelteil derart geneigt ist, dass das Oberteil kleinere Ausmasse aufweist als das Unterteil; dass der zweite Formkörper (1) eine erste und eine zweite Wand aufweist, die im wesentlichen senkrecht zueinander stehen und mit einem Ober-, einem Mittel- und einem Unterteil versehen sind, wobei das Mittelteil derart geneigt ist, dass das Oberteil kleinere Ausmasse aufweist als das Unterteil; weshalb die von den über die Verbundungsmittel (2, 3) miteinander verbundenen ersten und zweiten Formkörpern (1) gebildete rechteckige Kammer sich gegen das Oberteil hin verengt, um eine Öffnung (6) mit einem abgestuften Querschnitt zum Tragen und zur Aufnahme eines entsprechenden Deckels zu schaffen; und dass die Verbindungsmittel (2, 3) eine jeweilige Rippe (3) in der ersten Wand des ersten und des zweiten Formkörpers (1) und einen jeweiligen Kanal (2) in der zweiten Wand des ersten und des zweiten Formkörpers umfassen, welcher zur Aufnahme der Rippe (3) innerhalb derselben angepasst ist.

2. Gerät nach Anspruch 1, dadurch gekennzeichnet, dass der erste und der zweite Formkörper (1) im wesentlichen L-förmig sind.

3. Gerät nach Anspruch 1, dadurch gekennzeichnet, dass die erste und die zweite Wand des ersten und des zweiten Formkörpers (1) Verstärkungsrippen (4) beinhalten.

4. Gerät nach Anspruch 1, dadurch gekennzeichnet, dass die erste und die zweite Wand des ersten und des zweiten Formkörpers abgeschwächte Bereiche enthalten, um das Zurückziehen der genannten Bereiche zu erleichtern und so Öffnungen in der Wand zur Aufnahme einer Leitung zu schaffen.

5. Gerät nach Anspruch 1, dadurch gekennzeichnet, dass der erste und der zweite Formkörper aus einem leichten Material bestehen.

6. Gerät nach Anspruch 1, dadurch gekennzeichnet, dass die Formkörper aus einem Kunsstoff-Material bestehen.

7. Gerät nach Anspruch 1, dadurch gekennzeichnet, dass die Formkörper aus Poliesterfaser bestehen.

## Revendications

1. Appareil pour la construction d'une bouche d'accès comportant un premier et un second membres moulés (1) reliés entre eux par des moyens de jonction (2, 3) situés sur les bords (5) des parois des dits premier et second membres moulés (1) en vue de définir une chambre intérieure destinée à être disposée dans un trou aménagé dans la terre dans un emplacement voulu, se caractérisant en ce que le premier membre moulé (1) a une première et une seconde parois sensiblement perpendiculaires entre elles et pourvues d'une partie supérieure, d'une partie intermédiaire et d'une partie inférieure, la partie intermédiaire se trouvant inclinée de sorte que la partie supérieure a une dimension moindre que la partie inférieure; le second membre moulé (1) a une première et une seconde parois sensiblement perpendiculaires entre elles et pourvues d'une partie supérieure, une partie intermédiaire et une partie inférieure, la partie intermédiaire étant inclinée de sorte que la partie supérieure a une dimension moindre que la partie inférieure; selon quoi la chambre rectangulaire définie par le premier et le second membres moulés (1) reliés entre eux par les moyens de jonction (2, 3) se rétrécit vers la partie supérieure afin de former une bouche (6) ayant une section transversale échelonnée destinée à supporter et à loger le couvercle correspondant; et en ce que les moyens de jonction (2, 3) comportent une côte (3) dans respectivement la première paroi du premier et du second membres moulés (1), et un canal (2) dans respectivement la seconde paroi du premier et du second membres moulés, apte à recevoir dans son intérieur la côte (3).

2. Appareil selon la revendication 1, se caractérisant en ce que le premier et le second membres moulés (1) ont sensiblement la forme d'un L.

3. Appareil selon la revendication 1, se caractérisant en ce que la première et la seconde parois du premier et du second membres moulés (1) comprennent des côtes de renforcement (4) .

4. Appareil selon la revendication 1, se caractérisant en ce que la première et la seconde paroi du premier et du second membres moulés incorporent des zones de fragilité pour faciliter l'enlèvement de ces zones, aménageant ainsi des ouvertures dans la paroi pour recevoir une conduite.

5. Appareil selon la revendication 1, se caractérisant en ce que le premier et le second membres moulés sont composés d'un matériau léger.

6. Appareil selon la revendication 1, se caractérisant en ce que les membres moulés sont composés d'un matériau en plastique.

7. Appareil selon la revendication 1, se caractérisant en ce que les membres moulés sont composés de fibre de polyester.
